# EUROPÄISCHE PATENTSCHRIFT

(11) **EP 3 178 142 B1**
(45) Veröffentlichungstag und Bekanntmachung des Hinweises auf die Patenterteilung: **04.05.2022**
(21) Anmeldenummer: 15763534.3
(22) Anmeldetag: 07.09.2015
(51) Int. Cl.: H02G 5/06, F03D 80/80, H02G 5/00, H02G 5/02

(54) **STROMSCHIENENSYSTEM**
BUSBAR SYTSEM
SYSTÈME DE BARRES OMNIBUS

(30) Priorität: 22.09.2014 DE 102014218994; 22.09.2014 DE 202014007785 U
(43) Veröffentlichungstag der Anmeldung: 14.06.2017
(73) Patentinhaber: Siemens Aktiengesellschaft, 80333 München (DE)
(72) Erfinder: ALEFELDER, Frank, 53819 Neunkirchen-Seelscheid (DE); BERTELS, Frank, 50765 Köln (DE); HAAR, Rainer, 53121 Bonn (DE)
(86) Internationale Anmeldenummer: PCT/EP2015/070372
(87) Internationale Veröffentlichungsnummer: WO 2016/045950

(56) Entgegenhaltungen:
- WO-A1-2012/007235
- WO-A1-2012/038177
- WO-A1-2013/152885
- DE-A1-102009 032 619
- US-A- 3 376 377
- US-A- 5 785 542

## Beschreibung

Die Erfindung betrifft ein Stromschienensystem, das Schienen-module mit mehreren mit Abstand parallel zueinander angeordnete Stromschienen aufweist.

Die Stromschienen bekannter Stromschienensysteme übertragen im Allgemeinen elektrische Energie von einer Energiequelle zu einem Verbraucher. Zur Beabstandung der Stromschienen dienen Isolationskörper, die zwischen den Stromschienen angeordnet sind. Da die Länge der Stromschienen begrenzt ist, sind Verbinder (Bügel) zum Verbinden der Stromschienen vorgesehen, wobei jeweils zwei hintereinanderliegende Stromschienen miteinander verbunden werden.

Alternativ zu den Stromschienen sind elektrische Kabel bekannt, welche die elektrische Energie über die Adern des Kabels übertragen, wobei die Adern den Stromschienen entsprechen.

Bei Verwendung in Windkraftanlagen, bei denen die Kabel die elektrische Energie vom Generator oben im Windturm (Turm) der Anlage nach unten zu einem Transformator leiten, stellt sich die Montage und Verlegung der Kabel im Turm als sehr aufwendig dar. Insbesondere bei niedrigen Temperaturen, bei denen die Kabel ziemlich steif sind, ist eine Verlegung im Turm sehr erschwert.

Die WO 2013/152885 A1 offenbart ein Stromschienensystem mit mehreren hintereinanderliegenden Schienenmodulen, die über Klemmbügel miteinander verbunden sind, wobei jedes Schienenmodul mehrere Stromschienen aufweist, die mit Abstand parallel zueinander angeordnet sind und an ihrem einen Ende quer zur Längserstreckung verlaufende offenseitige Ausnehmungen aufweisen, wobei zur elektrischen Verbindung zweier Schienen-module das Schienenmodulende mit den quer zur Längserstreckung verlaufenden Ausnehmungen auf der gegenüberliegenden Seite in diesen Klemmbügel eingehängt sind, wobei jeweils eine Stromschiene des einen Schienenmoduls an einer Stromschiene des anderen Schienenmoduls seitlich anliegt.

Stromschienenenden, die in Klemmbügel eingesteckt werden, sind aus der US 3 376 377 A und der US 5 785 542 A bekannt. Die WO 2012/007235 A1 offenbart Klemmbügel, die jeweils über ein elastisches Lager an einem Tragwerk eines Turms einer Windkraftanlage angeordnet sind sowie im Innern des Turms vertikal hintereinanderliegend angeordnete Schienen-module.

Aus der WO 2012/038177 A1 ist ein im Gehäuse angeordneter Rahmen mit einer Durchgangsöffnung bekannt, durch welche die Stromschienen mit Abstand zum Rahmen verlaufen. Der Rahmen ist an seiner Außenkontur abgestützt und bei Anlage an der Innenseite des Gehäuses in dessen Längserstreckung bewegbar.

In der DE 10 2009 032619 A1 wird ein Schienenkasten für ein Schienenverteilersystem mit in einer Längsrichtung langgestreckten Stromschienen offenbart, wobei die Stromschienen ummantelt von einem Schienengehäuse, flach nebeneinander in dem Schienengehäuse angeordnet sind, bei dem jede der Stromschienen aus zwei separaten, als starre Profile ausgebildeten Teilstücken besteht, die in der Längsrichtung in Reihe Strom leitend miteinander verbunden sind, wobei die Teilstücke in dem Schienengehäuse in der Längsrichtung unabhängig voneinander verschiebbar und quer zur Längsrichtung ortsfest gehalten sind. Um den Schienenkasten derart zu optimieren, dass infolge von bauseitig auftretenden Montagetoleranzen gebildete Lücken im Schienenstrang kurzfristig ausgeglichen werden können, ist vorgesehen, dass das Schienengehäuse aus zwei Teilmänteln besteht, die zur Längenänderung des Schienengehäuses teleskopartig ineinander schiebbar sind.

Die Aufgabe der Erfindung ist es, ein Stromschienensystem zur Weiterleitung von elektrischer Energie zu erzielen, das insbesondere vertikal, z.B. im Windturm einer Windkraftanlage, relativ einfach zu montieren ist.

Die Aufgabe wird gelöst durch ein Stromschienensystem, bei dem mehrere Schienenmodule längs hintereinanderliegend angeordnet und über Klemmbügel miteinander verbunden sind, wobei jedes Schienenmodul mehrere Stromschienen aufweist, die mit Abstand parallel zueinander angeordnet sind und die an beiden Enden jeweils eine einseitig offene Ausnehmung aufweisen, die jeweils an einem Ende in und an dem anderen Ende quer zu deren Längsrichtung verläuft, wobei zur elektrischen Verbindung zweier Schienenmodule das Schienenmodulende mit den in Längsrichtung verlaufenden Ausnehmungen in den Klemmbügel eingesteckt und das Schienenmodulende mit den quer zur Längsrichtung verlaufenden Ausnehmungen auf der gegenüberliegenden Seite in diesen (denselben) Klemmbügel eingehängt sind, wobei jeweils eine Stromschiene des einen Schienenmoduls an einer Stromschiene des anderen Schienenmoduls seitlich anliegt und wobei die Ausnehmungen von der Seite gesehen eine Durchgangsöffnung bilden, durch die ein am Klemmbügel abgestütztes Spannelement verläuft, welches die beiden jeweils aneinander anliegenden Seiten der Stromschienen aneinanderdrückt.

Vorteilhafterweise sind die Klemmbügel (fest) an einem Tragwerk angeordnet und das Tragwerk ist insbesondere ein Turm einer Windkraftanlage, wobei die Schienenmodule im Innern des Turms vertikal hintereinanderliegend angeordnet sind und der Klemmbügel jeweils über ein elastisches Lager an dem Tragwerk befestigt ist.

Dabei ist der Klemmbügel vorzugsweise jeweils als separate Einheit ausgebildet.

Für eine einfache Montage weist der Klemmbügel weiter jeweils parallel voneinander beabstandete und elektrisch isolierende Trennelemente auf, deren Abstand so bemessen und deren Form so ausgebildet ist, dass die Stromschienen auf einer Seite einsteckbar und auf der anderen Seite einhängbar sind.

Zum Ausgleich von mechanischen Schwingungen wird vorgeschlagen, dass die Klemmbügel über ein elastisches Lager an dem Tragwerk befestigt sind.

Eine einfache elektrische Isolierung der Stromschienen voneinander sieht ineinandergesteckte Abstandselemente vor, die jeweils ein zylindrisches Mittelteil aufweisen, an dem jeweils eine Stromschiene anliegt, wobei auf dem Mantel des Mittelteils ein konischer Vorsprung angeordnet ist, der sich radial nach außen zwischen zwei unmittelbar benachbarte Stromschienen erstreckt.

Zur einfacheren Anpassung an unterschiedliche strommäßige Anforderungen wird vorgeschlagen, dass die nebeneinander angeordneten Stromschienen (insbesondere unterschiedliche Breiten bei gleicher Dicke und Länge und damit) unterschiedliche Querschnitte aufweisen.

Vorzugsweise sind für mehrere strommäßig zu verbindende Stromkreise eine entsprechende Anzahl Stromkreis-Pakete quer zur Längserstreckung nebeneinander angeordnet, zwischen denen insbesondere eine Stromschiene als ein gemeinsamer Erdleiter angeordnet sein kann.

Technisch einfach ist es, wenn im Gehäuse ein Rahmen mit einer Durchgangsöffnung angeordnet ist, durch welche die Stromschienen unter Belassung eines Abstands zum Rahmen verlaufen, wobei der Rahmen ein an seiner Außenkontur angeordnetes Stützelement aufweist, das bei Anlage an der jeweils unmittelbar zugewandten Innenseite des Gehäuses in Längserstreckung des Gehäuses bewegbar ist.

Eine einfache Kühlung wird bei vertikaler Ausrichtung erzielt, wenn der Rahmen Durchtrittsöffnungen aufweist, die mit dem Gehäuse zusammenwirkend einen Kamineffekt zur Kühlung der Stromschienen ermöglichen.

Die Montage lässt sich weiter vereinfachen, wenn die quer zur Längsrichtung verlaufenden Ausnehmungen zumindest bei einem Schienenmodul eine in Längsrichtung verlaufende Erweiterung aufweisen.

Die Erfindung wird nachfolgend anhand eines Ausführungsbeispiels näher beschrieben. Es zeigen:
- Fig. 1: ein Schienenmodul mit abgenommenem oberen Teil des zweiteiligen Gehäuses in einer dreidimensionalen Darstellung,
- Fig. 2: ein Schienenmodul gemäß Fig. 1 mit Stromschienen, die eine in Längsrichtung verlaufende Erweiterung der quer zur Längsrichtung verlaufenden Ausnehmungen aufweisen,
- Fig. 3: zwei hintereinander liegende Schienenmodule gemäß Fig. 1,
- Fig. 4: eine vergrößerte Darstellung des mittleren Bereichs der beiden Schienenmodule gemäß Fig. 3,
- Fig. 5: den mittleren Bereich der beiden Schienenmodule gemäß Fig. 4 von oben gesehen,
- Fig. 6: einen eine Einheit bildenden Klemmbügel zur Verbindung zweier Schienenmodule gemäß Fig. 1 und 2,
- Fig. 7: den Klemmbügel gemäß Fig. 6 in einer Explosionsdarstellung,
- Fig. 8: den Klemmbügel gemäß Fig. 7 als Seitenansicht,
- Fig. 9: zwei mittels eines Klemmbügels miteinander verbundene Schienenmodule gemäß Fig. 1 mit offenem Gehäuse und
- Fig. 10: das Ende des Schienenmoduls gemäß Fig. 1 bzw. Fig. 9 in Richtung Längserstreckung gesehen,
- Fig. 11: die nebeneinander angeordneten Stromschienen gemäß Fig. 10 mit unterschiedlichen Querschnitten,
- Fig. 12: die Sicht gemäß Fig. 10 ohne die Stromschienen,
- Fig. 13: drei Ausführungen der ineinander steckbaren Abstandselemente und
- Fig. 14: die mittels Klemmbügel verbundenen Schienenmodule gemäß Fig. 9 mit geschlossenem Gehäuse.

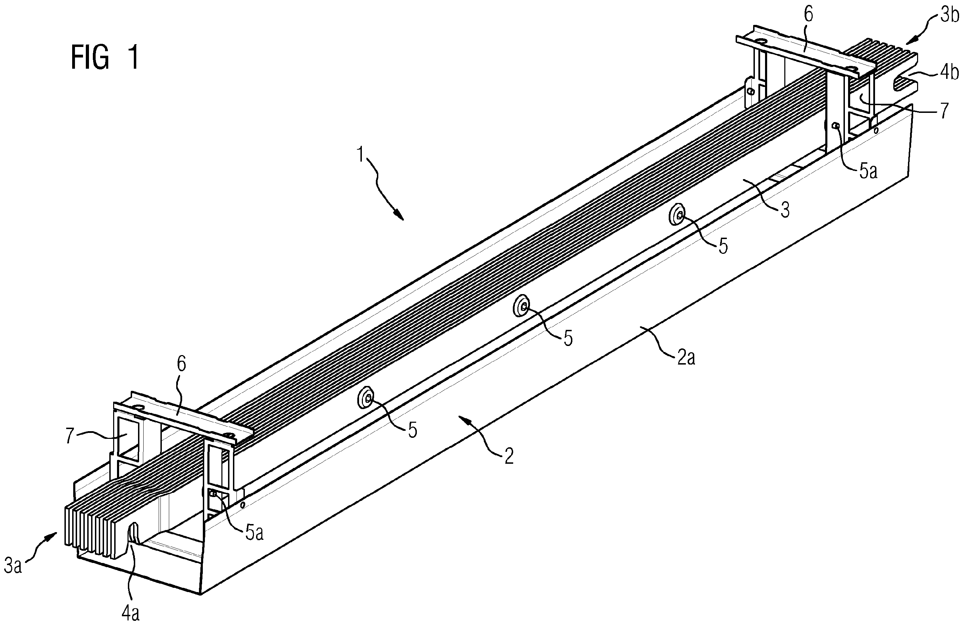

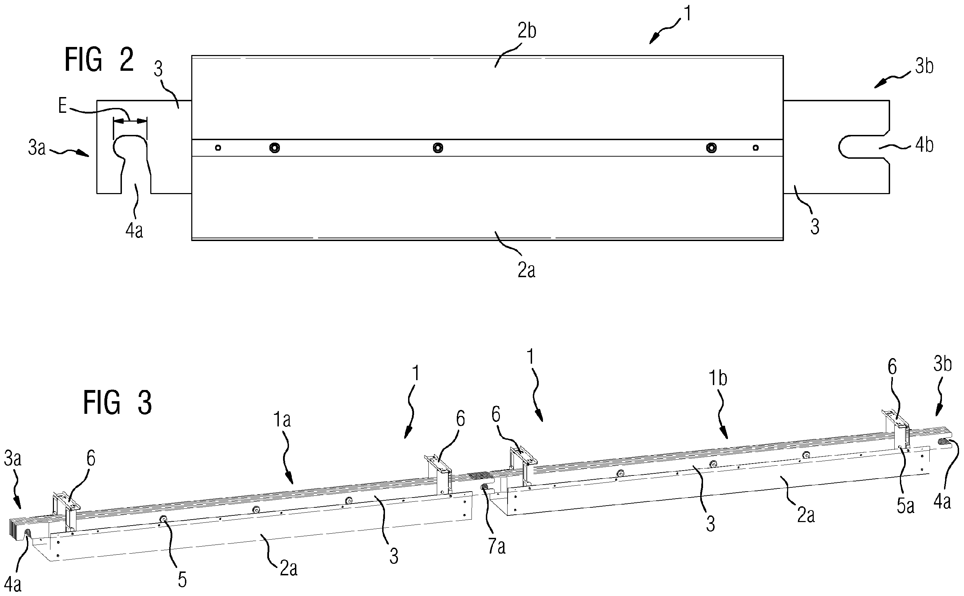

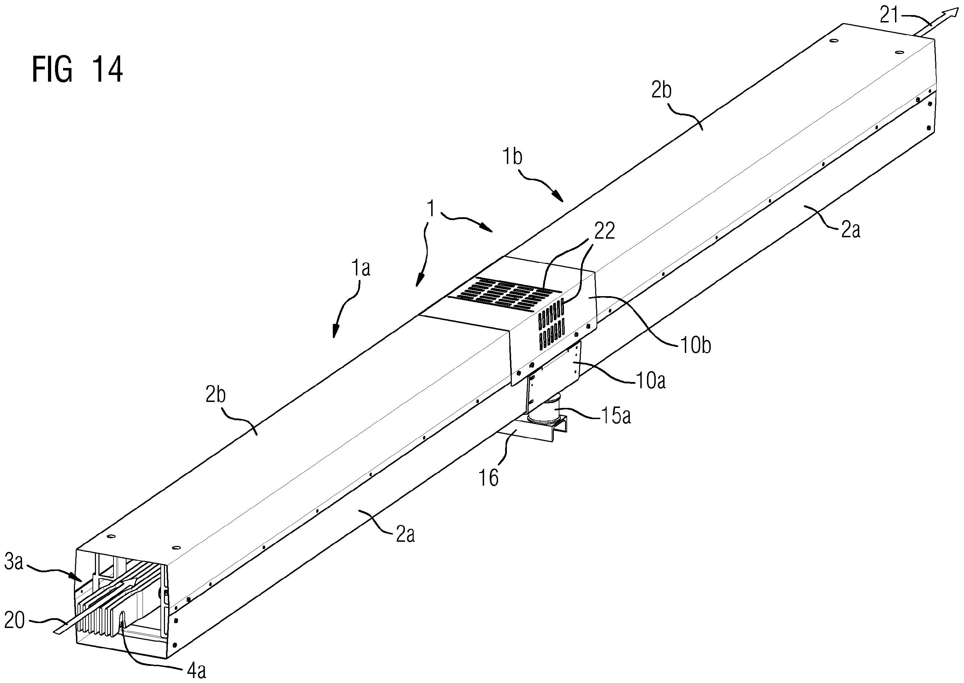

Fig. 1 zeigt ein Schienenmodul 1 mit einem zweiteiligen Gehäuse 2, von dem nur der untere Teil 2a zu sehen ist. Der obere Teil 2b (s. Fig. 2 und 14) des Gehäuses 2 ist in Fig. 1 abgenommen. In dem Gehäuse 2 befinden sich mehrere mit einem Abstand A parallel zueinander angeordnete Stromschienen 3, die an beiden Enden 3a, 3b einseitig offene Ausnehmungen 4a, 4b aufweisen. Die Ausnehmungen 4a verlaufen an dem einen Ende 3a alle quer zur Längserstreckung der Stromschienen 3 (Seitenhaken); am gegenüberliegenden Ende 3b erstrecken sich die Ausnehmungen 4b alle jeweils in Längsrichtung (Vorderhaken). Die Stromschienen 3 werden durch Spannelemente in Form von Schrauben 5, 5a zusammengehalten, wobei die Schrauben 5a im Bereich der Enden 3a, 3b zusätzlich an einem Rahmen 6 befestigt sind.

Die Rahmen 6 sorgen dafür, dass die Stromschienen 3 im Gehäuse 2 beabstandet von den Innenseiten der Wände des Gehäuses 2 angeordnet und, wenn es zur Anlage an den Innenseiten kommt, abgestützt sind. In den Rahmen 6 sind Durchtrittsöffnungen 7 vorhanden.

Fig. 2 zeigt ein alternatives Schienenmodul 1, bei dem die quer zur Längsrichtung der Stromschienen 3 verlaufenden Ausnehmungen 4a eine in Längsrichtung verlaufende Erweiterung E aufweisen, die im Wesentlichen als Längenausgleich bei der Montage dient. Die Erweiterung E liegt hier jeweils auf einer Linie mit der Längserstreckung der Ausnehmung 4b.

Fig. 3 zeigt zwei hintereinander liegende Schienenmodule 1a, 1b eines Stromschienensystems in einer dreidimensionalen Darstellung, wobei die sich abwechselnden Ausnehmungen 4a und 4b der beiden Schienenmodule 1a, 1b von der Seite gesehen eine geschlossene Durchgangsöffnung 7a bilden, also jeweils die Vorderhaken (Ausnehmungen 4b) des einen (hier linken) Schienenmoduls 1a und die Seitenhaken (Ausnehmungen 4a) des anderen (hier rechten) Schienenmoduls 1b.

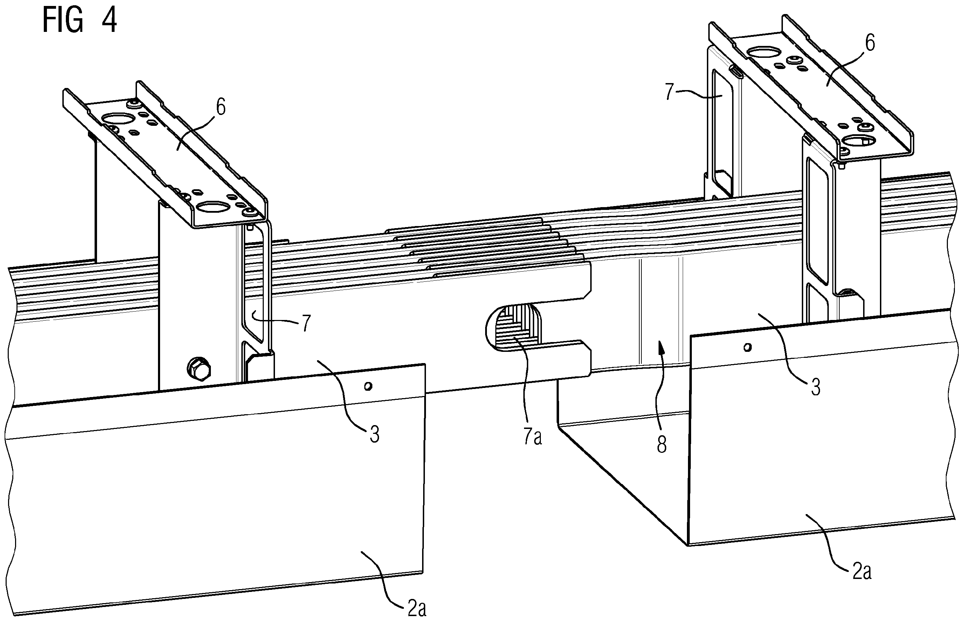

In Fig. 4, welche den mittleren Bereich von Fig. 3 in einer vergrößerten Darstellung zeigt, ist die Durchgangsöffnung 7a deutlich zu sehen.

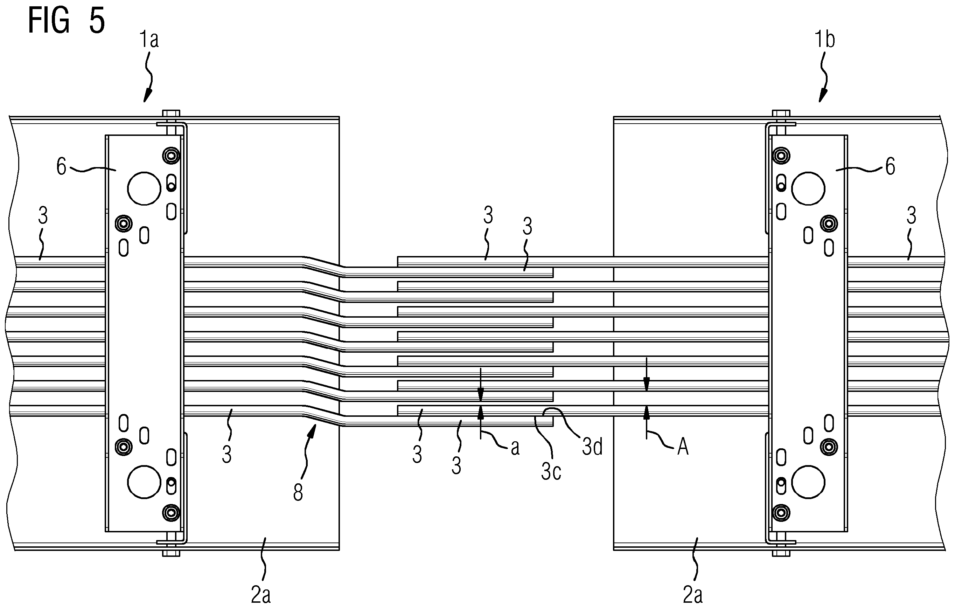

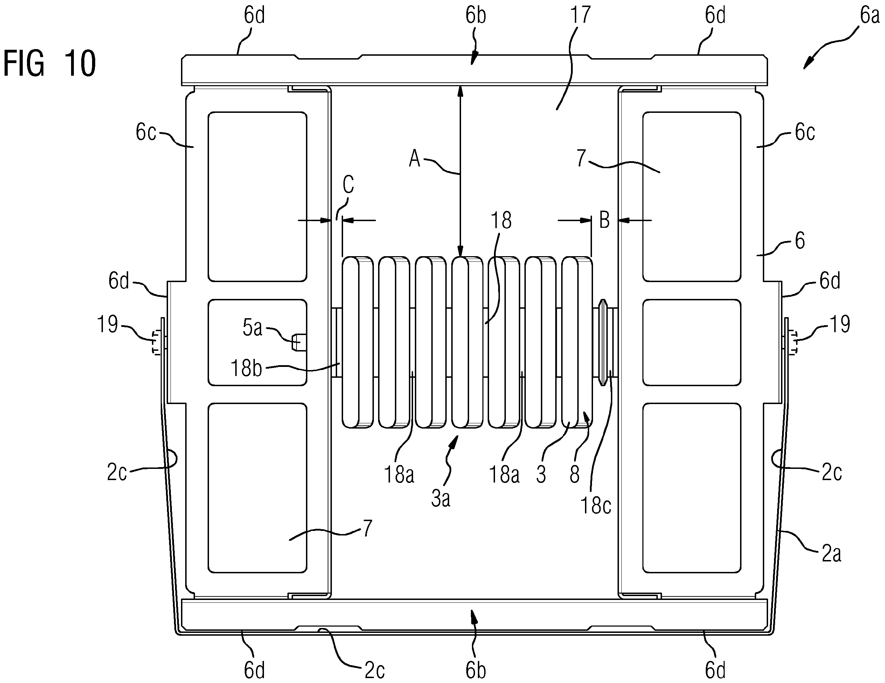

Fig. 5 zeigt den mittleren Bereich von Fig. 4 von oben, wobei man erkennt, dass jeweils eine Stromschiene 3 des Schienenmoduls 1a (Seite 3c) seitlich an jeweils einer Stromschiene 3 des Schienenmoduls 1b (Seite 3d) anliegt. Auf diese Weise ist eine Stromschiene 3 des einen Schienenmoduls 1a jeweils mit einer Stromschiene 3 des anderen Schienenmoduls 1b elektrisch verbunden. Zwischen den aneinander anliegenden Stromschienen 3 (den Stromschienenpaaren) ist ein Abstand a vorhanden, der von in Fig. 5 weggelassenen zwischen den Stromschienen 3 angeordneten Abstandselementen 18 (s. Fig. 10) hergestellt wird. Um einen Versatz innerhalb des Gehäuses 2 zu vermeiden, sind alle Stromschienen 3 an einem Ende (hier dem Ende 4a) entsprechend gekröpft, d.h. sie weisen jeweils eine Kröpfung 8 auf.

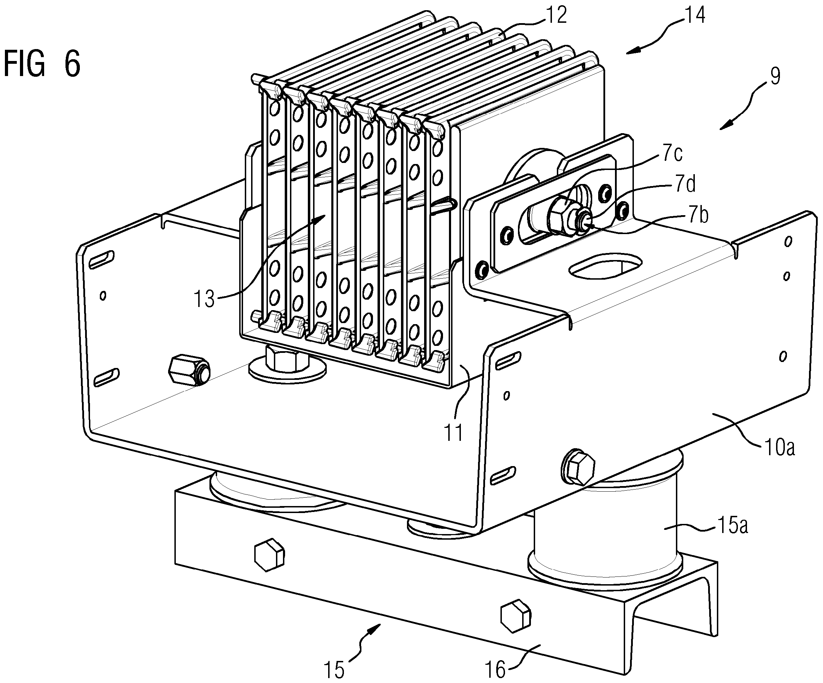

Fig. 6 zeigt einen Verbinder in Form eines Klemmbügels 9, der hier insbesondere als separate Einheit ausgebildet ist und zum Verbinden der Stromschienen 3 und damit zweier Schienen-module 1a, 1b dient. Der Klemmbügel 9 weist ebenfalls ein unteres Gehäuseteil 10a auf, welches mit dem unteren Gehäuseteil 2a der beiden Schienenmodule 1a, 1b verbindbar ist (s. Fig. 14). Zum Schutz gegen das Verdrehen der Trennelemente 12 dient ein u-förmiger Verdrehschutz 11, in welchem die parallel voneinander beabstandeten und elektrisch isolierenden Trennelemente 12 in Form von Isolierplatten vorhanden sind, wobei deren Abstand und Form, insbesondere am Rand, so bemessen bzw. ausgebildet ist, dass die Stromschienen 3 in die in Fig. 6 gezeigte vordere Seite 13 leicht einsteckbar (auf einen Bolzen aufsteckbar) und auf der anderen Seite 14 von oben leicht einhängbar (auf den Bolzen nach Art eines Hakens einhängbar) sind. Dabei liegen die Trennelemente 12 an den paarweise aneinander anliegenden (und sich überlappenden) Stromschienen 3 im Überlappungsbereich seitlich an. Das untere Gehäuseteil 10a ist weiter über hier zylindrisch ausgebildete Dämpfer 15a (insbesondere aus Kautschuk) und ein Befestigungsprofil 16, die zusammen ein elastisches Lager 15 bilden, an das Tragwerk montierbar.

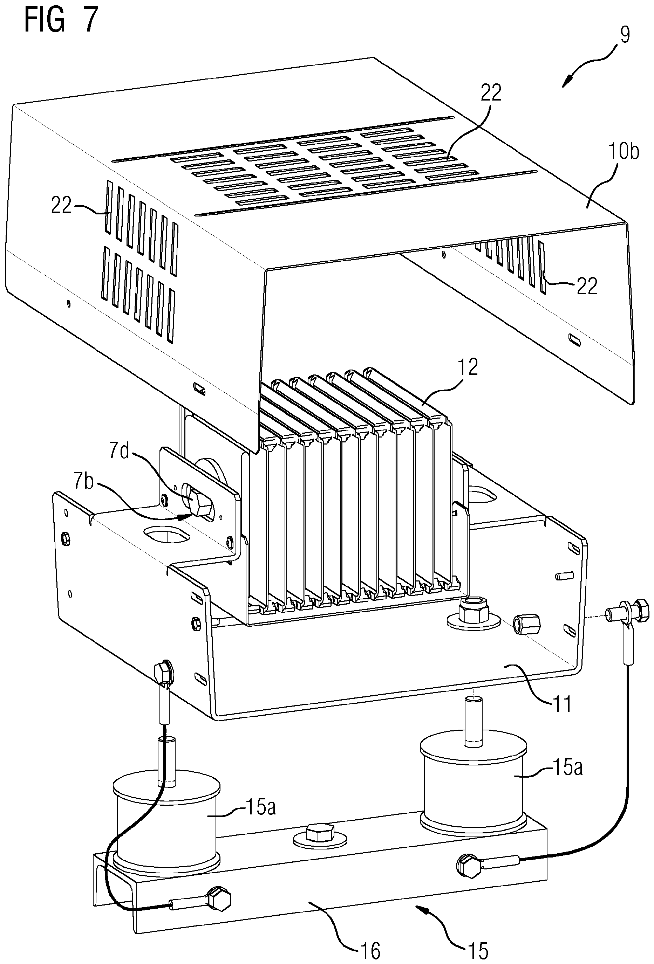

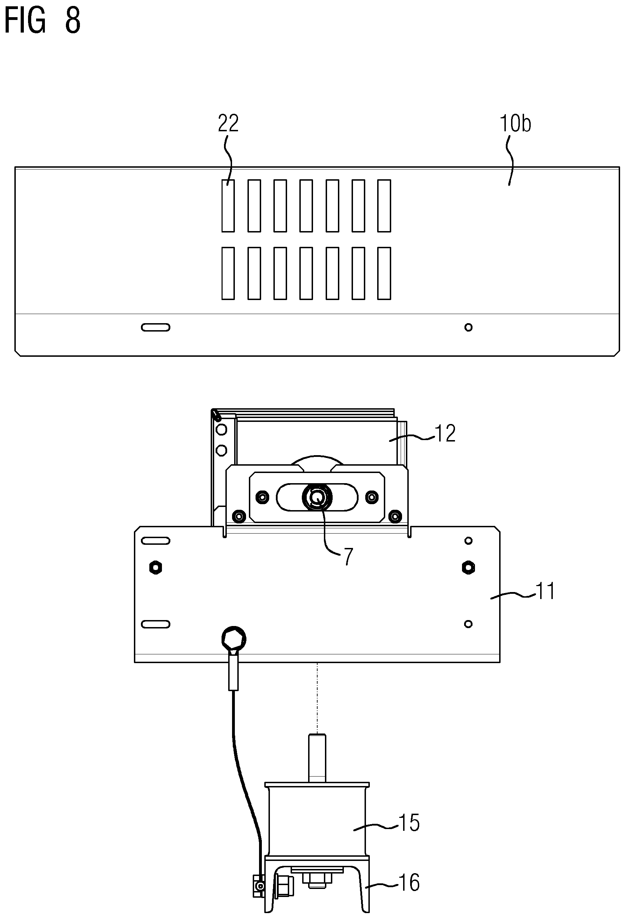

Die Stromschienen 3 sind also so, wie in Fig. 4 und 5 gezeigt, im Klemmbügel 9 angeordnet, wobei der Abstand a von den in Fig. 4 und 5 weggelassenen Trennelementen 12 ausgefüllt wird. Der zylindrische Bolzen bildet ein Spannelement 7b, hier einfach eine mit einem Isolierschlauch überzogene Schraube 7d (s. auch Fig. 7, 8) mit einem Gewinde und einer Mutter 7c ist, die sich durch die Durchgangsöffnung 7a erstreckt. Mittels der Schraube 7d werden die jeweils aneinander anliegenden Seiten 3c, 3d der sich längenmäßig überlappenden Stromschienen 3 fest aneinanderdrückt und so im Klemmbügel 9 befestigt und miteinander verbunden. Die Schraube 7d (der Bolzen, das Spannelement 7b) bildet zusammen mit den Trennelementen 12 einen Klemmblock.

Fig. 7 zeigt den vor der Montage der Schienenmodule 1a, 1b als Einheit an das Tragwerk montierbaren Klemmbügel 9 einschließlich oberem Gehäuseteil 10b in einer Explosionsdarstellung.

Fig. 8 zeigt den Klemmbügel 9 gemäß Fig. 7 von der Seite.

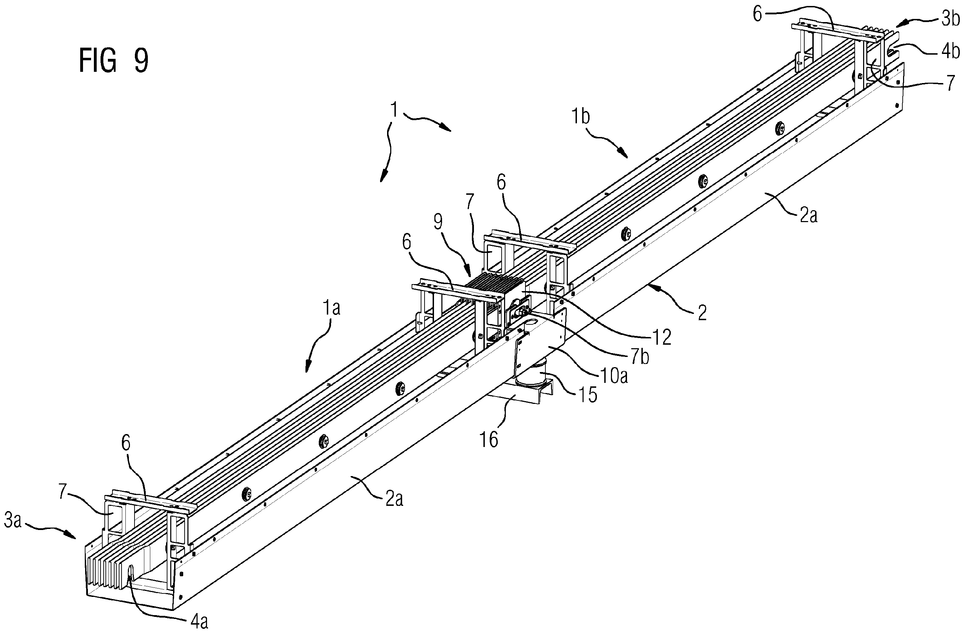

Fig. 9 zeigt die beiden Schienenmodule 1a, 1b und den Klemmbügel 9, wobei die Stromschienen 3 - so wie in Fig. 3, 4 und 5 gezeigt - voneinander isoliert durch die Trennelemente 12 im Klemmbügel 9 liegen.

Fig. 10 zeigt das Ende 3a des Schienenmoduls 1a gemäß Fig. 1 bzw. Fig. 9 in Richtung Längserstreckung der Stromschienen 3 gesehen, wobei der Rahmen 6 deutlich zu sehen ist. Jeder Rahmen 6 besteht aus vier Streben 6b, 6c, die eine Durchgangsöffnung 17 bilden. Durch die Durchgangsöffnung 17 hindurch verlaufen die Stromschienen 3 unter Belassung eines Abstands A, B, C. Abstandselemente 18 zwischen den Stromschienen 3 und dem Rahmen 6 sorgen dafür, dass die Stromschienen 3 elektrisch voneinander isoliert sind. Die Enden der Schrauben 5a (Spannelement 5b) sind beidseitig der Durchgangsöffnung 9 am Rahmen 6 befestigt.

Die zeitweise Befestigung des Gehäuses 2a - beispielsweise zu Transportzwecken - kann an zwei außenliegenden voneinander abgewandten Seiten des Rahmens 6 mittels Schrauben 19 erfolgen. Im Betrieb fehlen die Schrauben 19, da es sonst zu starken ausdehnungsbedingten Spannungen in Abhängigkeit von der Temperatur zwischen dem Gehäuse 2 und dem Rahmen 6 (den Stromschienen 3) kommen kann. Die Außenkontur des Rahmens 6 wird in Fig. 10 von den Kanten 6d gebildet.

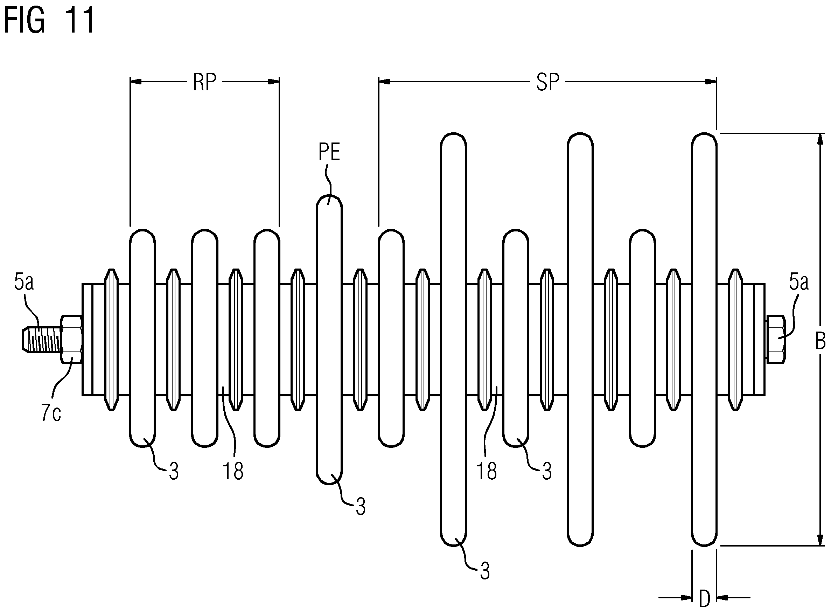

In Fig. 11 ist eine alternative Ausführung der nebeneinander angeordneten Stromschienen 3 gezeigt, die hier verschiedene Breiten B bei gleicher Dicke D und Länge und damit unterschiedliche Querschnitte aufweisen. Dies ermöglicht es insbesondere, das Gesamt-Stromschienenpaket aus Stromschienen 3 für mehr als einen Stromkreis zu verwenden. So kann der Gesamt-Querschnitt der Stromschienen 3, die insbesondere bei einer Windkraftanlage mit dem Stator verbunden sind (Paket SP), größer gewählt werden als der Gesamt-Querschnitt der Stromschienen 3, die mit dem Rotor verbunden sind (Paket RP). Zwischen den Paketen SP, RP, also allgemein zwischen zwei nebeneinander angeordneten (parallelen) Sytemen, ist hier speziell (also nicht zwingend) eine gemeinsame Stromschiene 3 als gemeinsamer Erdleiter PE (Protection Earth) angeordnet, der hier eine mittlere Breite B aufweist. Der Rahmen 6 kann dabei insbesondere zweiteilig ausgeführt sein (nicht gezeigt) .

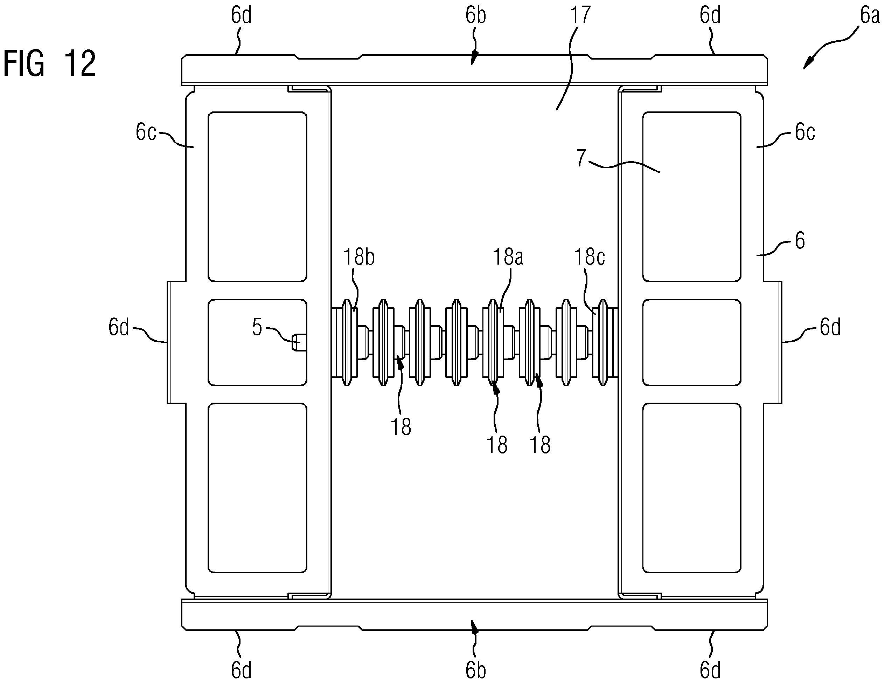

Fig. 12 zeigt die Sicht gemäß Fig. 10 ohne die Stromschienen 3. Man erkennt die nebeneinander angeordneten Abstandselemente 18, die hier jeweils ineinandergesteckt sind.

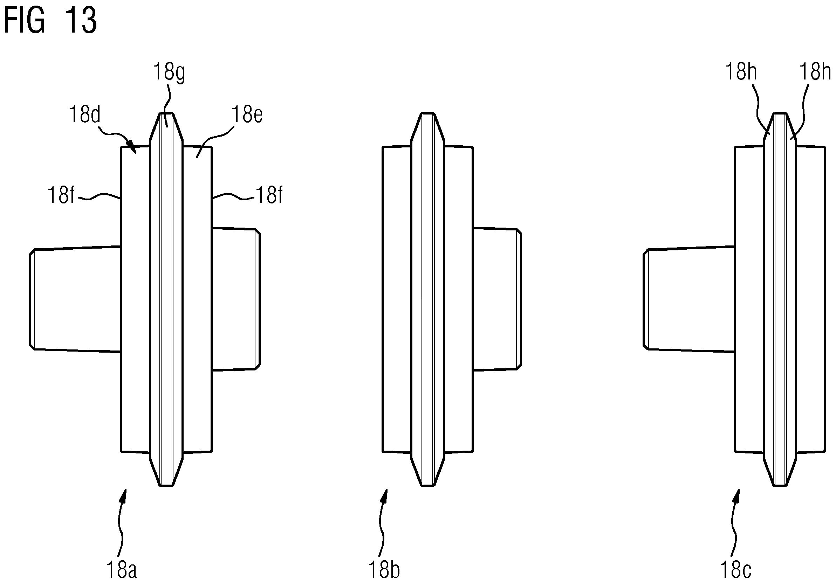

In Fig. 13 sind die ineinander steckbaren Abstandselemente 18, die drei Ausführungen 18a, 18b, 18c aufweisen, einzeln gezeigt, wobei die Ausführungen 18b bzw. 18c jeweils außen liegend angeordnet werden. Die Abstandselemente 18 weisen jeweils ein zylindrisches Mittelteil 18d auf, das im montierten Zustand (s. Fig. 12) koaxial zu der Schraube 5 verläuft und eine Isolierscheibe mit einem Durchgangsloch bildet. Bis auf die außenliegenden Mittelteile 18d liegt an deren Stirnseiten 18f jeweils eine Stromschiene 3 an. Auf dem Mantel 18e ist mittig ein radialer konischer Vorsprung 18g angeordnet, dessen zwei Schrägen 18h z.B. Wassertropfen von Kondenswasser und dergleichen aufnimmt und gegebenenfalls ableitet. Grundsätzlich kann auf die Ausführungen 18b und 18c auch verzichtet werden.

In Fig. 14 sind der Vollständigkeit halber die beiden miteinander über einen Klemmbügel 9 verbundenen Schienenmodule 1a, 1b mit geschlossenem Gehäuse 2, 10 mit den Unterteilen 2a, 10a und den Oberteilen 2b, 10b gezeigt.

Um bei geschlossenem Gehäuse 2 ein insbesondere bei vertikaler Ausrichtung kaminartiges Durchströmen von Kühlluft (z.B. in Richtung der Pfeile 20, 21) zu ermöglichen, sind in den Rahmen 6 Durchtrittsöffnungen 7 und an den Oberteilen 2b, 10b Schlitze 22 vorhanden. Die Größe des Rahmens 6, der Durchtrittsöffnungen 7 und der Schlitze 22 sind an die Gehäusegröße und den gewünschten (Kühl)-Luftdurchsatz angepasst, der entsprechend bei vertikaler Anordnung selbsttätig auftritt (Kamineffekt).

## Patentansprüche

1. Stromschienensystem,
mit mehreren hintereinanderliegenden Schienenmodulen (1, 1a, 1b), die über Klemmbügel (9) miteinander verbunden sind, wobei jedes Schienenmodul (1, 1a, 1b) mehrere Stromschienen (3) aufweist, die mit Abstand (A) parallel zueinander angeordnet sind und die an beiden Enden (3a, 3b) einseitig offene Ausnehmungen (4a, 4b) aufweisen, die an einem Ende (3b) des Schienenmoduls (1, 1a, 1b) in und an dem anderen Ende (3a) quer zur Längserstreckung verläuft, wobei zur elektrischen Verbindung zweier Schienenmodule (1, 1a, 1b) das Schienenmodulende (3b) des einen Schienenmoduls (1, 1a, 1b) mit den in Längserstreckung verlaufenden Ausnehmungen (4b) in einen der Klemmbügel (9) eingesteckt und das Schienenmodulende (3a) des anderen Schienenmoduls (1, 1a, 1b) mit den quer zur Längserstreckung verlaufenden Ausnehmungen (4a) auf der gegenüberliegenden Seite in diesen Klemmbügel (9) eingehängt sind, wobei jeweils eine Stromschiene (3) des einen Schienenmoduls (1, 1a, 1b) an einer Stromschiene (3) des anderen Schienenmoduls (1, 1a, 1b) seitlich anliegt und
wobei die Ausnehmungen (4a, 4b) von der Seite gesehen eine Durchgangsöffnung (7a) bilden, durch die ein am Klemmbügel (9) abgestütztes Spannelement (7b) verläuft, welches die aneinander anliegenden Seiten (3c, 3d) der Stromschienen (3) aneinanderdrückt.

2. Stromschienensystem nach Anspruch 1,
mit zusätzlich einem Tragwerk, wobei der Klemmbügel (9) jeweils an dem Tragwerk angeordnet und das Tragwerk insbesondere ein Turm einer Windkraftanlage ist, wobei die Schienenmodule (1, 1a, 1b) im Innern des Turms hintereinanderliegend angeordnet sind und der Klemmbügel (9) jeweils über ein elastisches Lager (15) an dem Tragwerk befestigt ist.

3. Stromschienensystem nach einem der Ansprüche 1 oder 2,
wobei der Klemmbügel (9) jeweils als separate Einheit ausgebildet ist

4. Stromschienensystem nach einem der Ansprüche 1 - 3,
wobei der Klemmbügel (9) jeweils parallel voneinander beabstandete und elektrisch isolierende Trennelemente (12) aufweist, wobei deren Abstand so bemessen und deren Form so ausgebildet ist, dass die Stromschienen (3) auf einer Seite (13) einsteckbar und auf der anderen Seite (14) einhängbar sind.

5. Stromschienensystem nach einem der Ansprüche 1 - 4,
wobei ineinandergesteckte Abstandselemente (18) vorgesehen sind, die jeweils ein zylindrisches Mittelteil (18d) aufweisen, an dem jeweils eine Stromschiene (3) anliegt, wobei auf dem Mantel (18e) des Mittelteils (18d) ein konischer Vorsprung (18g) angeordnet ist, der sich radial nach außen erstreckt.

6. Stromschienensystem nach einem der Ansprüche 1 - 5,
wobei nebeneinander angeordneten Stromschienen (3) unterschiedliche Querschnitte aufweisen.

7. Stromschienensystem nach einem der Ansprüche 1 - 6,
wobei für mehrere strommäßig zu verbindende Stromkreise eine entsprechende Anzahl Stromkreis-Pakete (SP, RP) quer zur Längserstreckung nebeneinander angeordnet sind, zwischen denen insbesondere eine Stromschiene (3) als ein gemeinsamer PE-Leiter (PE) angeordnet sein kann.

8. Stromschienensystem nach einem der Ansprüche 1 - 7,
wobei
- jedes Schienenmodul (1, 1a, 1b) ein Gehäuse (2) aufweist, in dem sich die Stromschienen (3) befinden und
- im Gehäuse (2) ein Rahmen (6) mit einer Durchgangsöffnung (17) angeordnet ist, durch welche die Stromschienen (3) unter Belassung eines Abstands (A, B, C) zum Rahmen (6) verlaufen, wobei der Rahmen (6) ein an der Außenkontur angeordnetes Stützelement (6d) aufweist, das bei Anlage an der unmittelbar zugewandten Innenseite des Gehäuses (2) in Längserstreckung des Gehäuses (2) bewegbar ist.

9. Stromschienensystem nach Anspruch 8,
wobei der Rahmen (6) Durchtrittsöffnungen (7) aufweist, die einen Kamineffekt zur Kühlung der Stromschienen (3) bei vertikaler Ausrichtung ermöglichen.

10. Stromschienensystem nach einem der Ansprüche 1 - 9,
wobei die quer zur Längsrichtung verlaufenden Ausnehmungen (4b) zumindest bei einem Schienenmodul (1, 1a, 1b) eine in Längsrichtung verlaufende Erweiterung aufweisen.

## Claims

1. Busbar system,
comprising a plurality of bar modules (1, 1a, 1b) which are situated one behind the other and are connected to one another by means of clamping brackets (9), wherein each bar module (1, 1a, 1b) has a plurality of busbars (3) which are arranged parallel to one another at a distance (A) and which have recesses (4a, 4b), which are open on one side, at both ends (3a, 3b), said recesses running in the longitudinal extent at one end (3b) of the bar module (1, 1a, 1b) and running transversely to the longitudinal extent at the other end (3a), wherein, for the purpose of electrically connecting two bar modules (1, 1a, 1b), the bar module end (3b) of one bar module (1, 1a, 1b) is plugged into one of the clamping brackets (9) by way of the recesses (4b) which run in the longitudinal extent, and the bar module end (3a) of the other bar module (1, 1a, 1b) with the recesses (4a) which run transversely to the longitudinal extent is suspended in this clamping bracket (9) on the opposite side, wherein in each case one busbar (3) of one bar module (1, 1a, 1b) bears laterally against a busbar (3) of the other bar module (1, 1a, 1b), and wherein the recesses (4a, 4b), as seen from the side, form a passage opening (7a) through which a clamping element (7b) which is supported against the clamping bracket (9) runs, said clamping element pressing the sides (3c, 3d) of the busbars (3), which sides bear against one another, against one another.

2. Busbar system according to Claim 1, additionally comprising a supporting mechanism, wherein the clamping bracket (9) is in each case arranged on the supporting mechanism, and the supporting mechanism is, in particular, a tower of a wind power plant, wherein the bar modules (1, 1a, 1b) are arranged one behind the other in the interior of the tower, and the clamping bracket (9) is in each case fastened to the supporting mechanism by means of an elastic bearing (15) .

3. Busbar system according to either of Claims 1 and 2, wherein the clamping bracket (9) is in each case formed as a separate unit.

4. Busbar system according to one of Claims 1-3, wherein the clamping bracket (9) in each case has electrically insulating separating elements (12) which are spaced apart from one another in parallel, wherein the distance between said separating elements and the shape of said separating elements are such that the busbars (3) can be plugged in on one side (13) and can be suspended on the other side (14).

5. Busbar system according to one of Claims 1-4, wherein spacer elements (18) which are plugged one into the other are provided, said spacer elements in each case having a cylindrical central part (18d) against which a busbar (3) bears in each case, wherein a conical projection (18g) which extends radially outward is arranged on the casing (18e) of the central part (18d).

6. Busbar system according to one of Claims 1-5, wherein busbars (3) which are arranged next to one another have different cross sections.

7. Busbar system according to one of Claims 1-6, wherein, for a plurality of electrical circuits which are to be connected for current flow, a corresponding number of electrical circuit packages (SP, RP) are arranged next to one another transversely to the longitudinal extent, it being possible for, in particular, a busbar (3) to be arranged between said electrical circuit packages as a common PE conductor (PE).

8. Busbar system according to one of Claims 1-7, wherein
- each bar module (1, 1a, 1b) has a housing (2) in which the busbars (3) are located and
- a frame (6) with a passage opening (17) is arranged in the housing (2), the busbars (3) running through said passage opening so as to leave a distance (A, B, C), wherein the frame (6) has a supporting element (6d) which is arranged on the outer contour and can be moved in the longitudinal extent of the housing (2) when it makes contact with the directly facing inner side of the housing (2).

9. Busbar system according to Claim 8, wherein the frame (6) has through-openings (7) which allow a chimney effect for cooling the busbars (3) in the case of vertical orientation.

10. Busbar system according to one of Claims 1-9, wherein the recesses (4b) which run transversely to the longitudinal direction have a widened portion, which runs in the longitudinal direction, at least in the case of one bar module (1, 1a, 1b).

## Revendications

1. Système de barre omnibus,
comprenant plusieurs modules (1, 1a, 1b) de barres les uns derrière les autres, qui sont reliés entre eux par étriers (9) de serrage, dans lequel chaque module (1, 1a, 1b) de barre a plusieurs barres omnibus (3), qui sont disposées parallèlement entre elles à distance (A) et qui ont aux deux extrémités (3a, 3b) des évidements (4a, 4b), qui sont ouverts d'un côté, qui s'étendent à une extrémité (3b) du module (1, 1a, 1b) de barre suivant l'étendue longitudinale et à l'autre extrémité (3a) transversalement à l'étendue longitudinale, dans lequel, pour la liaison électrique de deux modules (1, 1a, 1b) de barres, l'extrémité (3b) de l'un des modules (1, 1a, 1b) de barres est enfiché par les évidements (4b) s'étendant dans la direction longitudinale, dans l'un des étriers (9) de serrage et l'extrémité (3a) de l'autre module (1, 1a, 1b) de barres est accrochée par les évidements (4a) s'étendant transversalement à l'étendue longitudinale au côté opposé dans cet étrier (9) de serrage, dans lequel respectivement une barre (3) omnibus du un module (1, 1a, 1b) de barre s'applique latéralement à une barre (3) omnibus de l'autre module (1, 1a, 1b) de barres et
dans lequel les évidements (4a, 4b) forment, considérés par le côté, une ouverture (7a) de passage, dans laquelle passe un élément (7b) de blocage, qui est appuyé sur l'étrier (9) de serrage et qui presse l'un contre l'autre les côtés (3c, 3d) s'appliquant l'un sur l'autre des barres (3) omnibus.

2. Système de barre omnibus suivant la revendication 1, comprenant en outre une ossature porteuse, dans lequel l'étrier (9) de serrage est disposé respectivement sur l'ossature porteuse et l'ossature porteuse est notamment une tour d'une éolienne, dans laquelle les modules (1, 1a, 1b) de barres sont disposés les uns derrière les autres à l'intérieur de la tour et l'étrier (9) de serrage est fixé à l'ossature porteuse respectivement par un support (15) élastique.

3. Système de barre omnibus suivant l'une des revendications 1 ou 2,
dans lequel
l'étrier (9) de serrage est constitué sous la forme d'une unité distincte.

4. Système de barre omnibus suivant l'une des revendications 1 à 3,
dans lequel
l'étrier (9) de serrage a des éléments (12) de séparations disposés parallèlement à distance les uns des autres et isolants électriquement, dans lequel leur distance est telle et leur forme est telle que les barres (3) omnibus peuvent être enfichées d'un côté (13) et accrochées de l'autre côté (14).

5. Système de barre omnibus suivant l'une des revendications 1 à 4,
dans lequel
il est prévu des éléments (18) de mise à distance s'emboîtant les uns dans les autres, qui ont chacun une partie (18d) médiane cylindrique, à laquelle s'applique respectivement une barre (3) omnibus, dans lequel sur la surface (18e) latérale de la partie (18d) médiane est disposée une saillie (18g) conique, qui s'étend radialement vers l'extérieur.

6. Système de barre omnibus suivant l'une des revendications 1 à 5,
dans lequel
des barres (3) omnibus disposées les unes à côté des autres ont des sections transversales différentes.

7. Système de barre omnibus suivant l'une des revendications 1 à 6,
dans lequel
pour plusieurs circuits électriques à relier en courant, un nombre correspondant de paquets (SP, RP) de circuit électrique sont disposés les uns à côté des autres transversalement à l'étendue longitudinale, paquets entre lesquels peut être disposée notamment une barre (3) omnibus en tant que conducteur (PE) PE commun.

8. Système de barre omnibus suivant l'une des revendications 1 à 7,
dans lequel
- chaque module (1, 1a, 1b) de barres a un boîtier (2), dans lequel se trouvent les barres (3) omnibus et
- dans le boîtier (2) est disposé un cadre (6) ayant une ouverture (17) de passage, dans laquelle les barres (3) omnibus passent en laissant une distance (A, B, C) avec le cadre (6), dans lequel le cadre (6) a un élément (6d) d'appui, qui est disposé sur le contour extérieur et qui, lors d'un contact avec la face intérieure, tournée directement vers lui, du boîtier (2) est mobile dans l'étendue longitudinale du boîtier (2).

9. Système de barre omnibus suivant la revendication 8,
dans lequel
le cadre (6) a des ouvertures (7) de passage, qui rendent possibles en orientation verticale un effet de cheminée pour le refroidissement des barres (3) omnibus.

10. Système de barre omnibus suivant l'une des revendications 1 à 9,
dans lequel
les évidements (4b) s'étendant transversalement à la direction longitudinale ont, au moins pour un module (1, 1a, 1b) de barre, un élargissement s'étendant dans la direction longitudinale.
